# EUROPÄISCHE PATENTSCHRIFT

(11) **EP 3 334 284 B1**
(45) Veröffentlichungstag und Bekanntmachung des Hinweises auf die Patenterteilung: **06.07.2022**
(21) Anmeldenummer: 16753329.8
(22) Anmeldetag: 10.08.2016
(51) Int. Cl.: A21B 7/00, G07F 11/26, B65G 1/04

(54) **LEBENSMITTELFÖRDER- UND -ABGABEVORRICHTUNG**
FOODSTUFF-CONVEYING AND -DISCHARGING APPARATUS
DISPOSITIF DE TRANSPORT ET DE DISTRIBUTION DE PRODUITS ALIMENTAIRES

(30) Priorität: 13.08.2015 DE 102015113400
(43) Veröffentlichungstag der Anmeldung: 20.06.2018
(73) Patentinhaber: R. WEISS Packaging GmbH & Co. KG, 74564 Crailsheim (DE)
(72) Erfinder: WEISS, Reinald, 91626 Schopfloch (DE)
(74) Vertreter: Canzler & Bergmeier Patentanwälte Partnerschaft mbB
(86) Internationale Anmeldenummer: PCT/EP2016/069087
(87) Internationale Veröffentlichungsnummer: WO 2017/025576

(56) Entgegenhaltungen:
- EP-A1- 0 341 564
- EP-A2- 1 688 042
- CH-A5- 585 444
- DE-A1-102009 026 619
- DE-U1- 29 520 735
- FR-A1- 2 681 217
- US-A- 4 687 119
- US-A1- 2014 346 017
- US-B1- 6 755 322
- Anonymous: "Schrittmotor - Wikipedia", , 17. Juni 2015 (2015-06-17), XP055307812, Gefunden im Internet: URL:https://de.wikipedia.org/w/index.php?t itle=Schrittmotor&oldid=143174975 [gefunden am 2016-10-05]

## Beschreibung

Die Erfindung betrifft eine Lebensmittelförder- und -abgabevorrichtung mit einem Gehäuse, in dem Lebensmittel gefördert werden, insbesondere zu einer Abförder- bzw. Ausgabestelle zwecks Entnahme durch eine Person.

Derartige Vorrichtungen sind seit langem bekannt, beispielsweise aus der EP 1 617 385 A1. Sie dienen zur Förderung und schließlich Abgabe von Lebensmitteln, beispielsweise von Backwaren in Supermärkten. Hier ist es beispielsweise bekannt, mittels eines vorgeschalteten Backofens Backwaren vor Ort zu backen oder auszubacken und in einem Ausgabespeicher, der in einem Gehäuse untergebracht ist, vorzuhalten. Auf Kundenanforderung wird dann die Backware vom Ausgabespeicher mittels einer Transporteinrichtung - oder auch direkt von der Transporteinrichtung selber, auf der ggf. auch Lebensmittel Zwischenlagern - zu einer Abförderstelle gefördert, die auch gleichzeitig als Ausgabefach dienen kann und aus welchem der Kunde die Backware entnimmt.

Es sind weiterhin Ausgabeautomaten bekannt, welche einen in einem vertikalen Schacht verfahrbaren Aufzug aufweisen. Der Aufzug transportiert die Lebensmittel von einer höheren Ebene in eine tiefere Ebene, in welcher auch das Ausgabefach angeordnet ist.

Die US 6 755 322 B1 offenbart eine senkrecht entlang eines Regallagers verfahrbare Kippeinrichtung, die mittels eines Servomotors um eine horizontale Achse verschwenkbar ist. Hierzu wird ein Drehgeber verwendet, der üblicherweise bei Servomotoren Verwendung findet.

Es ist Ziel der vorliegenden Erfindung, eine Vorrichtung der eingangs genannten Art zur Verfügung zu stellen, die nur geringen Platz einnimmt, aber schnell, schonend und zuverlässig Lebensmittel, insbesondere Backwaren, innerhalb der Vorrichtung zu fördern vermag.

Diese Aufgabe wird durch die Merkmale des Anspruchs 1 gelöst.

Die Erfindung zeichnet sich insbesondere dadurch aus, dass die erfindungsgemäße Lebensmittelförder- und -abgabevorrichtung, im Folgenden auch nur kurz Vorrichtung genannt, eine Transporteinrichtung mit mindestens einer um eine horizontale Achse schwenkbaren Plattform umfasst, wobei die schwenkbare Plattform mittels eines Schrittmotors verschwenkbar ist. Diese Plattform dient als Aufzug für Lebensmittel, wobei durch ihre Schwenkbarkeit die Be- und Entladung der Plattform sowie der schonende und sichere Transport der Lebensmittel in der Vorrichtung in optimaler Weise und kostengünstiger Ausführung gewährleistet werden. Außerdem ist der Transportweg durch das vertikale Verfahren der Plattform kurz und kann schnell zurückgelegt werden.

Der Schrittmotor steht hierbei mit der Plattform derart in Wirkverbindung bzw. ist derart mit der Plattform gekoppelt, dass diese mittels des Schrittmotors verschwenkt werden kann. Diese Wirkverbindung ermöglicht demnach ein aktives Verschwenken der Plattform, wobei vorzugsweise eine Steuereinrichtung den Schrittmotor entsprechend ansteuert.

Die Plattform ist gemäß der Erfindung derart ausgebildet und angeordnet, dass sie von zwei Seiten her beladbar ist. Zum einen ist dies die Seite der besagten Zufördereinrichtung, zum anderen von der dieser Zufördereinrichtung gegenüberliegenden Seite. Der Schacht ist in diesem Fall auf dieser zweiten Seite nicht geschlossen, sondern eine zweite Zufördereinrichtung - die ebenfalls Teil der erfindungsgemäßen Vorrichtung ist - kann beispielsweise unmittelbar an die Plattform angrenzend vorgesehen sein, um die Plattform mit mindestens einem Lebensmittel zu beschicken. In diesem Fall ist die Plattform bevorzugt zu diesen beiden Seiten hin schwenkbar ausgebildet, d.h. sowohl in die eine als auch in die andere Richtung kippbar bzw. schwenkbar. Auch ist es möglich, dass die besagte Plattform - zusätzlich zur Beschickung über die besagte erste Zufördereinrichtung von der einen Seite - von einer benachbarten, zweiten Plattform beschickbar ist, die ebenfalls in dem gleichen oder einem benachbarten Schacht verfahrbar ist und auf der der ersten Zufördereinrichtung abgewandten Seite der ersten Plattform angeordnet ist. Diese zweite Plattform kann ihrerseits von der der besagten ersten Plattform abgewandten Seite mit einer zweiten Zufördereinrichtung beschickt werden.

Bevorzugt liegt die Schwenkachse der Plattform senkrecht zur jeweiligen Förderrichtung, in welche die Zufördereinrichtungen die Lebensmittel zur Plattform fördern. In diesem Fall kann die Beladung (Beschickung) und Entladung (Abfördern) der Plattform besonders einfach vorgenommen werden. Auch kann die Plattform vorteilhafterweise im Wesentlichen die gleiche Bautiefe wie die Zufördereinrichtungen aufweisen.

Eine besonders präzise Schwenkposition der Plattform ist insbesondere dann realisierbar, wenn der Schrittmotor mit der Schwenkachse der Plattform gekoppelt ist. Der Schwenkmotor fährt hierbei zusammen mit der Plattform im Schacht auf- und abwärts. Da derartige Schrittmotoren sehr robust und zudem in sehr kleinen Größen erhältlich sind, entstehen bei dieser Ausgestaltung keine Platzprobleme. Zudem kann mittels des Schrittmotors sehr präzise der Schwenkwinkel der Plattform sowie die Fixierung in einer Schwenkposition realisiert werden.

Gemäß einer Alternative greift der Schrittmotor an einer anderen Stelle der Plattform an, um die Plattform um die Schwenkachse zu verschwenken.

Die Schwenkachse ist gemäß einer vorteilhaften Ausführungsform auf der einer Zufördereinrichtung abgewandten und damit der anderen, gegenüberliegenden Zufördereinrichtung zugewandten Plattformseite angeordnet.

Gemäß einer alternativen Ausführungsform ist die Schwenkachse zwischen der Vorder- und Hinterkante der Plattform, bezogen auf die sich gegenüberliegenden Zufördereinrichtungen, angeordnet, beispielsweise mittig. Durch eine solche Konstruktion kann die Plattform ggf. das Gewicht des aufzunehmenden Lebensmittels besser abfangen.

Bei einer vorteilhaften Ausgestaltung können beispielsweise die Enden der Schwenkachse in zwei sich im Schacht gegenüberliegenden senkrechten Führungsnuten laufen und ein Schrittmotor zum Verschwenken der Plattform im Bereich der von der einen Zufördereinrichtung abgewandten (oder auch zugewandten) Plattformkante angreifen. Die Schwenkachse kann hierbei an unterschiedlichsten Stellen in Bezug auf diese Zufördereinrichtung angeordnet sein (nahe oder entfernt von dieser Zufördereinrichtung oder in einer Zwischenstellung), je nach Anordnung der Führungsnuten und des Schrittmotors.

Derartige senkrecht verlaufende Führungsnuten sind generell zur sicheren Führung der Plattform vorteilhaft. Der Schrittmotor kann alternativ auch direkt an der Schwenkachse der Plattform angreifen.

Vorzugsweise ist die schwenkbare Plattform - bezogen auf eine horizontale Ebene bzw. eine Horizontallinie - aufwärts und abwärts schwenkbar ausgebildet. Somit kann sie beispielsweise mit einer gegenüber der Lebensmittelauflageebene der jeweiligen Zufördereinrichtung niedriger platzierten Schwenkachse heranfahren und die Plattform in einem aufwärts geschwenkten Zustand (in Bezug auf die Schwenkachse) mit ihrer Vorderkante auf gleicher oder geringfügig niedriger Höhe relativ zur Transportebene (d.h. der Auflagefläche für die Lebensmittel) der Fördereinrichtung platziert werden. In diesem Zustand kann die jeweilige Zufördereinrichtung ein Lebensmittel zur Plattform fördern, welches dann abwärts auf die Plattform gleitet und dort sicher für den Vertikaltransport lagert.

Durch ein Abwärtsschwenken der Plattform ist der Abtransport des Lebensmittels von der Plattform, insbesondere in ein Ausgabefach, durch Schwerkraft-getriebenes Abwärtsgleiten des Lebensmittels von der Plattform einfach und sicher möglich. Wenn der Abtransport noch durch ein aktiv angetriebenes Transportmittel, beispielsweise ein Förderband in unmittelbarer Nähe der nach unten geschwenkten Vorderkante der Plattform, unterstützt wird, kann dieses das Lebensmittel an seiner Vorderseite erfassen und den Abtransport von der Plattform unterstützen.

Es ist besonders bevorzugt, wenn die schwenkbare Plattform während der Fahrt von der jeweiligen Zufördereinrichtung zur Abförderstelle in einer gegenüber einer Horizontalebene verschwenkten Lage positionierbar ist, damit das auf der Plattform transportierte Lebensmittel während der Fahrt sicher gelagert werden kann.

Die schwenkbare Plattform weist besonders bevorzugt auf der der jeweiligen Zufördereinrichtung abgewandten oder abzuwendenden (wenn einstellbar) Seite eine aufwärts ragende Rückhalteeinrichtung auf. Wenn ein Lebensmittel auf die in eine schräge Position geschwenkte Plattform gefördert wird, kann das Lebensmittel aufgrund der Rückhalteeinrichtung nicht nach hinten in den Schacht rutschen. Die Rückhalteeinrichtung ist beispielsweise als Wand oder Gitter ausgebildet, einschließlich der Ausbildung als eine ortsfeste Gehäusewand. Gemäß einer Ausführungsform ist die Rückhalteeinrichtung mit der Plattform verfahrbar, aber nicht mitverschwenkbar ausgebildet; stattdessen bleibt sie auch beim Verschwenken der Plattform in ihrer, vorzugsweise aufrechten, Position. Bei anderen Ausführungsformen ist die Rückhalteinrichtung derart mit der Plattform verbunden, dass sie nicht nur mitverfahren, sondern auch mitverschwenkt wird.

Weiterhin ist es vorteilhaft, wenn ein weiterer Schrittmotor vorgesehen ist, der die schwenkbare Plattform im Schacht in Vertikalrichtung zu verfahren vermag. Hierbei ist ein schnelles, zuverlässiges, positionsgenaues Verfahren der Plattform realisierbar. Der Schrittmotor ist besonders bevorzugt ortsfest installiert und treibt ein vorzugsweise umlaufendes Element an, an welcher die Plattform angelenkt ist.

Bei einer entsprechenden Ausgestaltung weist die Transporteinrichtung ein umlaufendes Element auf, das beispielsweise als Förderband, Fördergurt, Förderseil und/oder Förderkette - allgemein: Förderstrang - ausgebildet ist. An dem umlaufenden Element sind die mindestens eine Plattform angelenkt und vorzugsweise auch ein Schrittmotor angeordnet, der die Plattform zu verschwenken vermag. Es sind bei einer sehr kostengünstigen Ausgestaltung somit lediglich ein Schrittmotor für die vertikale Verfahrbarkeit der Plattform und ein Schrittmotor zum Verschwenken dieser Plattform vorgesehen.

Eine vorteilhafte Weiterbildung hinsichtlich der mindestens einen Plattform sieht vor, dass sowohl ihre Oberseite als auch ihre Unterseite mit mindestens einem Lebensmittel beschickbar ist. Dazu ist die Plattform derart verschwenkbar ausgebildet, dass sie eine Vertikalebene kreuzt. Vorteilhafterweise ist hierbei an der Vorder- oder Hinterkante der Plattform (in Bezug auf die Zu- und Abförderrichtung der Lebensmittel) eine Rückhalteeinrichtung in Form einer vorzugsweise senkrecht zur Plattform verlaufenden Wand vorgesehen, die zu beiden Seiten über die Plattform hinausragt. Mittels dieser Ausgestaltung können Lebensmittel von zwei verschiedenen Seiten von der Plattform aufgenommen und abgegeben werden, ohne dass die Lebensmittel in der einen oder anderen Position von der Plattform nach hinten rutschen können, sondern stets von der Rückhalteeinrichtung hieran gehindert werden. Somit sind insbesondere die Beladung der Oberseite der Plattform von der ersten Zufördereinrichtung und die Beladung der Unterseite der Plattform von der gegenüberliegenden zweiten Zufördereinrichtung, die auf der anderen Seite der Plattform vorgesehen ist, möglich.

Bei einer vorteilhaften Ausgestaltung ist die mindestens eine Plattform mittels zweier paralleler und beabstandeter Achsen angelenkt aufgehängt, wobei einer dieser Achsen die besagte Schwenkachse ist. Durch eine Relativbewegung der beiden Achsen zueinander in Vertikalrichtung kann die Plattform verschwenkt werden. Durch diese Ausgestaltung können aufgrund der doppelten Aufhängung der Plattform insbesondere relativ schwere Lebensmittel kippsicher und stabil gefördert werden.

Besonders bevorzugt sind mehrere Zufördereinrichtungen übereinander in dem Gehäuse angeordnet. Die mindestens eine Plattform ist hierbei derart im Schacht bewegbar, dass zumindest einige dieser Zufördereinrichtungen die Plattform mit Lebensmittel beschicken können, indem die Plattform in Bezug auf diese Zufördereinrichtungen entsprechend positioniert wird.

Vorzugsweise ist der Schacht von außerhalb der Vorrichtung durch mindestens eine durchsichtige Scheibe zumindest teilweise einsehbar. Auf diese Weise ist der Lebensmittelfluss auch für den Verbraucher überschaubar.

Die Erfindung betrifft ebenfalls eine Einheit mit einem Backofen und einer dem Backofen nachgeschalteten Vorrichtung, wie sie zuvor beschrieben wurde.

Diese Vorrichtung zum Fördern und Abgeben von Lebensmitteln einer solchen Einheit umfasst gemäß der Erfindung die mindestens eine weitere Zufördereinrichtung (oben als zweite Zufördereinrichtung bezeichnet), wobei die mindestens eine Plattform zwischen den beiden Zufördereinrichtungen angeordnet ist und von ihren beiden Seiten mittels der beiden Zufördereinrichtungen beladen werden kann.

Vorteilhafte Weiterbildungen der Erfindung sind durch die Merkmale der Unteransprüche gekennzeichnet.

Im Folgenden wird die Erfindung anhand von Figuren näher erläutert. Es zeigen:
- **Fig. 1**: eine Vorderansicht einer schematisch dargestellten erfindungsgemäßen Vorrichtung mit einer in einem Schacht verfahrbaren sowie verschwenkbaren Plattform (Vorderwand abgenommen),
- **Fig. 2**: eine Draufsicht auf die Vorrichtung der Fig. 1 mit abgenommener Abdeckung,
- **Fig. 3**: einen Ausschnitt einer zweiten Ausführungsform einer verschwenkbaren Plattform in Vorderansicht,
- **Fig. 4**: einen Ausschnitt einer dritten Ausführungsform mit einer von zwei Seiten beschickbaren Plattform in Vorderansicht,
- **Fig. 5**: einen Ausschnitt einer vierten Ausführungsform einer verschwenkbaren Plattform in Vorderansicht,
- **Fig. 6**: einen Ausschnitt einer fünften Ausführungsform mit einer von zwei Seiten beschickbaren Plattform in Vorderansicht,
- **Fig. 7**: einen Ausschnitt einer sechsten Ausführungsform einer verschwenkbaren Plattform in Vorderansicht, und
- **Fig. 8**: einen Ausschnitt einer siebten Ausführungsform einer verschwenkbaren Plattform in Vorderansicht.

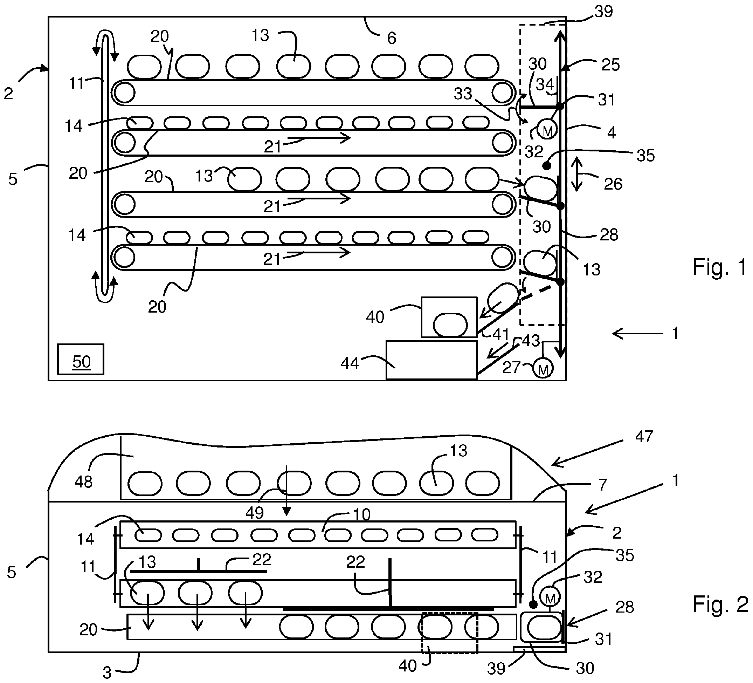

In den Fig. 1 und 2 ist eine erste Ausführungsform einer vorliegend nicht beanspruchten, aber Teile der Erfindung (s. weiter unten) allgemein offenbarenden Vorrichtung 1 dargestellt, die zur Förderung und Abgabe von Backwaren 13, 14, die zudem in der Vorrichtung 1 gespeichert werden, ausgebildet ist. Der Vorrichtung 1 ist ein Durchlaufbackofen 47 (nur in der Fig. 2 abschnittsweise angedeutet) vorgeschaltet. Die Erfindung bezieht sich sowohl auf die Vorrichtung 1 zum Fördern und Abgeben von Backwaren als auch auf eine Einheit, welche den Durchlaufbackofen 47 und die besagte Vorrichtung 1 umfasst.

Die Vorrichtung 1 dient als Vorratsspeicher, aus welchem bei Kundenabruf die gewünschte Lebensmittelart - insbesondere Backwaren unterschiedlicher Art, die zuvor in dem Backofen 47 gebacken oder ausgebacken wurden - in der gewünschten Anzahl ausgebbar ist.

Die Vorrichtung weist ein Gehäuse 2 aus undurchsichtigen Wänden auf. Hierbei besitzt das Gehäuse 2 eine Vorderwand 3 (in der Fig. 1 entfernt), eine rechte Seitenwand 4 (gesehen von der Vorderwand 3 aus), eine linke Seitenwand 5, eine Rückwand 6 und eine Abdeckung 7 auf.

Innerhalb des Gehäuses 2 laufen mehrere Träger 10 um, die jeweils an ihren Stirnseiten mit in Vertikalrichtung umlaufenden Endlosketten 11 oder anderen Endlosförderern gekoppelt sind, deren Umlaufrichtung vorzugsweise umgedreht werden kann (der besseren Übersichtlichkeit halber ist in der Figur 1 nur eine Endloskette 11 gezeigt, in der Fig. 2 hingegen beide).

Auf den Trägern 10 können unterschiedliche Backwaren platziert werden, die von dem davor geschalteten Durchlaufbackofen 47 über ein Förderband 48 in Förderrichtung 49 automatisch angeliefert werden, wobei beispielsweise nicht dargestellte Schieber den Transfer vom Förderband 48 auf die Träger 10 realisieren.

Gemäß der Fig. 2 ist auf dem obersten dem Durchlaufbackofen 47 zugewandten Träger 10 - vorzugsweise sind eine Vielzahl umlaufender Träger 10 vorhanden - nebeneinander zehn Brötchen 14 vorhanden, während sich auf dem obersten der Vorderwand 3 zugewandten Träger 10 drei Brote 13 nebeneinander befinden, während weitere fünf Brote 13 schon von diesem Träger 10 in Richtung der Vorderwand 3 auf eine Zufördereinrichtung 20 geschoben wurden (Genaueres hierzu weiter unten).

Aus den Fig. 1 und 2 ist zu entnehmen, dass unmittelbar hinter und entlang der Vorderwand 3 vier Zufördereinrichtungen 20 in Form von horizontal und endlos laufenden Förderbändern angeordnet sind. Wenn ein Träger 10 auf Höhe einer solchen Zufördereinrichtung 20 von den seitlichen Endlosketten 11 mit Hilfe einer Steuerung 50 zum Stehen gebracht wird, können - gemäß der vorliegenden Ausführungsform - mittels zweier nebeneinander angeordneter Horizontalschieber 22 die Backwaren 13 bzw. 14 auf die auf gleicher Höhe positionierte Zufördereinrichtung 20 geschoben werden.

Die Zufördereinrichtung 20 ist in der Lage, die Backwaren 13 bzw. 14 senkrecht zur Schubrichtung, mit welcher die Schieber 22 die Backwaren 13, 14 auf die Zufördereinrichtung 20 transportieren, seitlich in Förderrichtung 21 zu transportieren, vorliegend zur Seitenwand 4 des Gehäuses 2.

Gemäß dem dargestellten Ausführungsbeispiel werden alle vier Zufördereinrichtungen 20 jeweils mit Hilfe von Schiebern 22 mit Backwaren 13 bzw. 14, die auf Trägern 10 (oder anderen Lager- und Transporteinrichtungen) lagern, beschickt.

In dem Gehäuse 2 ist eine Transporteinrichtung 25 vertikal in einem Schacht 35 verfahrbar, der vorliegend entlang der rechten Seitenwand 4 des Gehäuses 2 angeordnet ist. Die Transporteinrichtung 25 und ihre Verfahrrichtung nach oben und unten ist schematisch als langer Doppelpfeil dargestellt. Sie kann mittels Förderbändern, Förderseilen, Fördergurten etc. (allgemein: Förderstränge) realisiert werden, die der Fachmann kennt. Die Förderstränge sind vorzugsweise umlaufend ausgebildet. Wie insbesondere der Draufsicht der Fig. 2 zu entnehmen ist, weist eine Plattform 30 vorliegend Abmessungen auf, welche es erlauben, dass jeweils ein Brot 13 oder ein Brötchen 14 vollständig von ihr aufgenommen werden kann. Vorzugsweise ist die Plattform 30 in Draufsicht rechteckig ausgestaltet und beispielsweise aus dünnem Edelstahl oder Aluminium gefertigt.

Die Transporteinrichtung 25 umfasst mindestens eine solche Plattform 30, die um eine horizontale Schwenkachse 31 verschwenkbar ist, siehe den die Schwenkrichtung andeutenden Doppelpfeil 33. Hierzu dient ein Schrittmotor 32, der insbesondere mit der Schwenkachse 31 gekoppelt sein kann (nur schematisch angedeutet). Der Schrittmotor 32 kann jedoch auch an einer anderen Stelle der Plattform 30 angreifen, um diese um die Schwenkachse 31 zu verschwenken. Die Schwenkachse 31 verläuft vorliegend horizontal sowie senkrecht zur Förderrichtung 21 der Zufördereinrichtung 20 (und parallel zur Schubrichtung der Schieber 22). Weiherhin ist in den Fig. 1 und 2 die Schwenkachse 31 auf der der Zufördereinrichtung 20 abgewandten Seite der Plattform 30 angeordnet.

Der Schrittmotor 32 ermöglicht es, die Plattform 30 in die gewünschte Lage zu verschwenken und in dieser Lage zu belassen, um einen sicheren An-, Weiter- und Abtransport der Backwaren 13, 14 auf der Plattform 30 zu realisieren. Insbesondere kann die Plattform 30 - in Bezug auf eine Horizontalebene, die durch die Schwenkachse 31 verläuft - aufwärts (s. die mittig positionierte sowie die unten positionierte, als durchgezogener Strich dargestellte Plattform 30 in der Fig. 1) sowie abwärts (s. die untere, gestrichelte Plattform 30 in Fig. 1) geschwenkt werden.

In den Fig. 1, 3 - 5 sind stets mehrere Plattformen 30 eingezeichnet, um deren verschiedenen möglichen Positionen zu verdeutlichen. Es können auch tatsächlich mehrere Plattformen 30 vorhanden sein, wobei dann vorzugsweise jeder Plattform 30 ein Schrittmotor 32 zugeordnet ist. Zur Realisierung der Erfindung ist allerdings grundsätzlich eine einzige Plattform 30 ausreichend und auch am kostengünstigsten. Wie erwähnt, sind aber auch mehrere übereinander angeordnete oder endlos umlaufende Plattformen 30 möglich und von der Erfindung mitumfasst. Die unverschwenkte Neutralstellung der Plattform 30 ist durch die oberste Plattform 30 in der Fig. 1 symbolisiert.

Auf der der Zufördereinrichtung 20 abgewandten Seite der Plattform 30 ist eine Rückhalteeinrichtung 34 in Form einer senkrecht aufragenden Stütze vorgesehen, die gemäß der vorliegenden Ausführungsform beim Schwenken der Plattform 30 nicht mitverschwenkt wird.

Die Plattform 30 sowie deren zugeordneter Schrittmotor 32 sind innerhalb des Schachts 35 in senkrechter Richtung (s. Doppelpfeil 26) verfahrbar ausgebildet, wobei hierfür ein weiterer, vorzugsweise stationär angeordneter Schrittmotor 27 vorgesehen ist, der beispielsweise auf einen endlosen Förderstrang 28, beispielsweise ausgebildet als endloses Förderband, wirkt, an welcher die Plattform 30 bzw. die Plattformen 30 sowie der jeweilige zugehörige Schrittmotor 32 direkt oder indirekt befestigt sind. Es sei angemerkt, dass der Übersichtlichkeit halber nicht bei jeder in den Figuren dargestellten Plattform 30 der zugehörige Schrittmotor 32 dargestellt ist.

Die Plattform 30 kann demnach präzise in vertikaler Richtung verfahren und in Bezug auf die Zufördereinrichtung oder Zufördereinrichtungen 20 positioniert werden, einschließlich des Schwenkens in eine für die Übernahme einer Backware 13, 14 geeignete Position.

Die Endlosketten 11, die Schieber 22, die Zuliefereinrichtungen 20 sowie das Verfahren und Verschwenken der Plattform(en) 30 sowie andere Transportvorgänge in dem Gehäuse 2 werden durch eine Steuereinrichtung 50 (in Fig. 1 nur schematisch angedeutet) gesteuert. Diese ist für die gesamten Steuerungsaufgaben zuständig und verarbeitet u.a. auch Anforderungsbefehle von Kunden, die über Eingabemittel (Touchpad, Wahlschalter, etc. - hier nicht dargestellt) an der Vorderseite des Gehäuses 2 Art und Anzahl der von der Vorrichtung 1 vorgehaltenen und auszugebenden Backwaren 13, 14 auswählen können.

Am unteren Ende des Schachts 35 ist eine Abförderstelle 40 vorgesehen, die vorliegen als Ausgabefach ausgebildet ist. In die Abförderstelle 40 endet eine Rutsche 41, die von der Plattform 30 - wenn diese in die entsprechende Position verfahren und nach unten verschwenkt wird - mit einer Backware 13 bzw. 14 beschickbar ist.

Ebenso ist unterhalb der Rutsche 41 eine weitere Rutsche 43 vorgesehen, welche zu einem Sammelbehälter 44 führt. Backwaren 13, 14, welche nicht abverkauft wurden, können hier hinein - beispielsweise am Ende des Tages - abgefördert werden. Hier gibt beispielsweise die Steuereinrichtung 50 den Befehl, ab einer bestimmten Uhrzeit die Träger 10, auf denen noch Backwaren 13, 14 lagern, nach und nach über die Plattform 30 in den Sammelbehälter 44 zu befördern.

Es sei erwähnt, dass die Ausnutzung der Schwerkraft bei der genannten rutschenden Übergabe auf die Plattform 30 und auch die Abgabe - hier an die Rutschen 41, 43 - bevorzugt ist, da diese Ausgestaltung konstruktiv einfach und robust ist.

Bei einer Kundenanforderung über die besagten Eingabemittel wird entsprechend der Fig. 1 die Zufördereinrichtung 20 derart von der Steuereinrichtung 50 angesteuert, dass die sich auf der Zufördereinrichtung 20 befindlichen Brote 13 in Richtung auf die Transporteinrichtung 25 gefördert werden. Eine bzw. die (wenn nur eine vorhanden ist) Plattform 30 ist bzw. wird angrenzend an die Zufördereinrichtung 20 positioniert und - bezogen auf die Schwenkachse 31 - aufwärts geschwenkt, so dass sich ihre freie Kante ungefähr auf Höhe oder geringfügig niedriger als die Transportebene der Zufördereinrichtung 20 befindet. Die Zufördereinrichtung 20 kann somit das seitlichste Brot 13 über ihre äußerste Kante auf die Plattform 30 fördern, wo es abwärts rutscht, bis es an der Rückhalteeinrichtung 34 anliegt. Anschließend wird die Plattform 30 in der aufwärts geschwenkten Stellung mittels des Förderstrangs 28 zur Rutsche 41 verfahren und dann abwärts verschwenkt (s. gestrichelt dargestellte Plattform 30), so dass das Brot 13 über die Rutsche 41 in die Abförderstelle bzw. das Ausgabefach 40 gelangt und dort vom Kunden entnommen werden kann.

In der Fig. 1 ist weiterhin angedeutet, dass eine durchsichtige Scheibe 39 aus beispielsweise Plexiglas an der Vorderwand 3 entlang des Schachts 35 vorgesehen ist, so dass die Bewegungen der Plattform(en) 30 durch diese Scheibe 39 von einem Kunden beobachtet werden können. Das Kundeninteresse kann hierdurch gesteigert werden.

Es sei erwähnt, dass in der Vorrichtung 1 auch Baguettes gespeichert und ausgegeben werden können. Für diese ist vorzugsweise eine eigene Klappe vorgesehen (nicht dargestellt), welche sich an der Vorderseite des Gehäuses 2 befindet. Die Baguettes werden demnach nicht mittels der Zufördereinrichtung 20 seitlich abtransportiert, sondern senkrecht nach unten in eine separate Ausgabe oder die Abförderstelle 40 fallen gelassen (ggf. mit Unterstützung einer Rutsche). Die entsprechenden Ausgestaltungen sind jedoch nicht Teil der Erfindung.

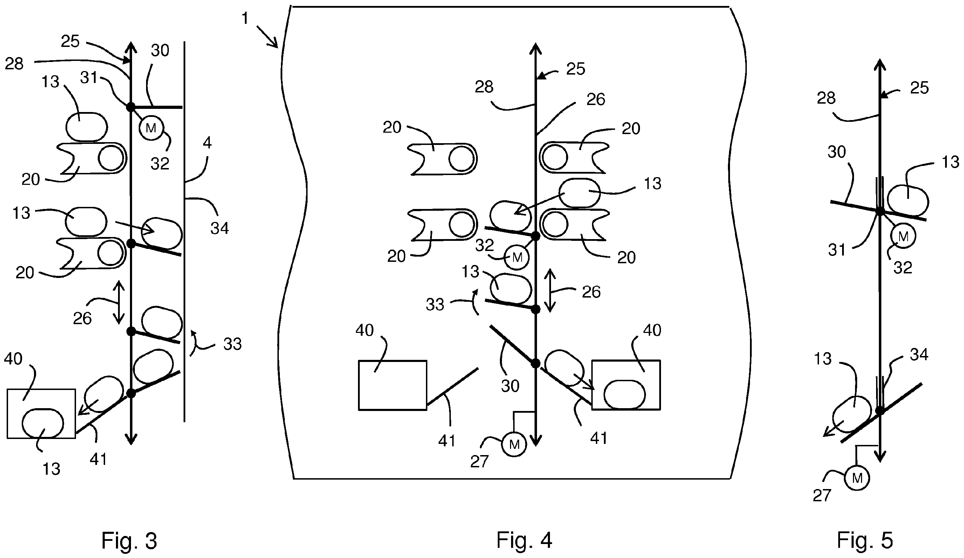

In der Fig. 3 ist ein Ausschnitt einer zweiten, vorliegend ebenfalls nicht beanspruchten, aber ebenfalls Teile der Erfindung (s. weiter unten) allgemein offenbarenden Ausführungsform mit einer verschwenkbaren Plattform 30 in Vorderansicht dargestellt. Hier befindet sich die Schwenkachse 31 unmittelbar benachbart zur Zufördereinrichtung 20, so dass die freie Kante der Plattform 30 der Zufördereinrichtung 20 abgewandt ist. Bei der Übergabe eines Brotes 13 oder eines Brötchens 14 (oder einer Laugenbrezel oder eines Croissants, etc.) von der Zufördereinrichtung 20 auf die Plattform 30 wird diese vorliegend abwärts geschwenkt, so dass die entsprechende Backware (Brot 13 in der Fig. 1) gemäß der dargestellten Ausführungsform an der Seitenwand 4 des Gehäuses 2 zur Anlage kommt und von dieser zurückgehalten wird.

Hierbei ist konstruktiv darauf zu achten, dass der Förderstrang 28 nicht mit dem Transportweg der Backware 13, 14 von der Zufördereinrichtung 20 auf die Plattform 30 kollidiert. Der Förderstrang 28 kann hierzu beispielweise an den Seiten der Plattform 30 (diese Seiten verlaufen parallel zur Förderrichtung 21) verlaufen, wobei ein Ansatzstück (nicht dargestellt) den Schrittmotor 32 zum Verschwenken der Plattform 30 trägt und im Schacht 35 auf und ab verfahren wird. Die Plattform 30 ist ihrerseits derart mit dem Ansatzstück gekoppelt, dass der Transportweg für die Backwaren 13, 14 von der Zufördereinrichtung 20 auf die Plattform 30 und der Abtransportweg von der Plattform 30 auf die Rutsche 41 frei sind. Eine solche Ausgestaltung ist selbstverständlich auch für die in den anderen Figuren dargestellten Ausführungsformen möglich.

Bei der Abwärtsfahrt der Plattform 30 in dem Schacht 35 verbleibt die Plattform 30 in dieser Schwenkposition; alternativ kann die Plattform 30 in eine geringer abwärts geneigte Stellung verschwenkt werden, damit die Backware (Brot 13 in der Fig. 3) keine zu große Reibung an der Seitenwand 4 erfährt und es hier zu Störungen oder Beschädigungen der Backware 13, 14 kommt. Beim Erreichen der Rutsche 41 wird die Plattform 30 derart aufwärts verschwenkt, dass das Brot 13 über die Rutsche 41 in die als Ausgabefach ausgebildete Abförderstelle 40 gelangt.

Bei einer leicht abgewandelten, nicht dargestellten Ausführungsform ist am freien Ende der Plattform 30 eine fest mit der Plattform 30 verbundene Rückwand vorgesehen, an welcher die auf die Plattform 30 geschobenen Backwaren 13, 14 zur Anlage kommen. Hierzu muss der Schacht 35 entsprechend breit ausgebildet sein.

In der Fig. 4 ist eine Ausführungsform gemäß der Erfindung dargestellt, bei der die Plattform 30 von zwei Seiten beschickbar ist. Hierzu führt von beiden Seiten je eine Zufördereinrichtung 20 Backwaren (hier Brote 13) zur Transporteinrichtung 25 heran, wobei vorliegend die Schwenkachse 31 der einen Zufördereinrichtung 20 (in der Fig. 4 die rechte) und die freie Kante der Plattform 30 der anderen Zufördereinrichtung 20 (in der Fig. 4 die linke) zugewandt sind. Es sind vorliegend zudem zwei Abförderstellen 40 vorhanden, die jeweils über eine Rutsche 41 beschickbar sind. Alternativ werden die Backwaren nur in eine Abförderstelle 40 gefördert. In der dargestellten Variante werden durch Hochschwenken des freien Endes (in Bezug auf die Schwenkachse 31) der Plattform 30 die Backwaren 13, 14 in die rechte Abförderstelle 40, und durch Absenken in die linke Abförderstelle 40 gefördert.

In der Fig. 5 ist ein Ausschnitt einer weiteren Ausführungsform gemäß der Erfindung dargestellt, bei der die Schwenkachse 31 mittig an der Plattform 30 angeordnet ist. Auch hier ist eine Beschickung von beiden Seiten (s. Fig. 4) möglich. Dargestellt ist zudem, dass Backwaren (hier Brote 13) von einer Seite der Plattform 30 durch Verschwenken auf die andere Seite rutschen können. In diesem Ausführungsbeispiel ähnelt die Plattform 30 einer mittig aufgehängten Wippe. Es sind des weiteren Rückhalteeinrichtungen 34 angedeutet, die ein Durchrutschen der Backwaren von der einen Plattformhälfte zur anderen verhindern sollen.

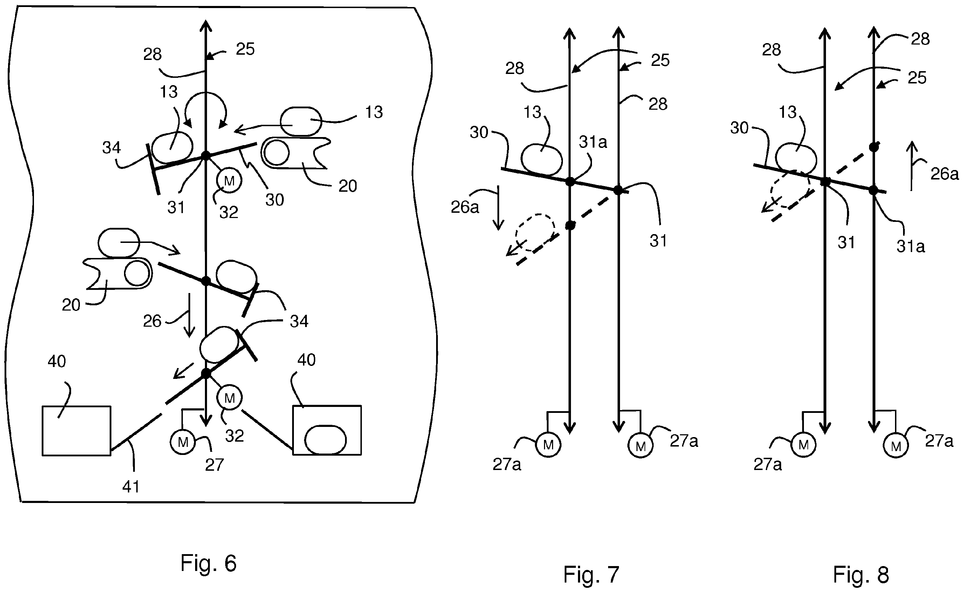

In der Fig. 6 ist ein weiteres Ausführungsbeispiel gemäß der Erfindung ausschnittsweise dargestellt. Hier ist sowohl die Oberseite als auch die Unterseite der Plattform 30 mit mindestens einer Backware 13, 14 beschickbar. Dazu ist die Plattform 30 um ihre Schwenkachse 31 mit Hilfe des Schrittmotors 32 derart verschwenkbar ausgebildet, dass sie eine Vertikalebene zu kreuzen vermag (s. teilkreisförmigen Doppelpfeil). An der vorderen oder hinteren Kante der Plattform 30 ist eine Rückhalteeinrichtung 34 in Form einer senkrecht zur Plattform 30 verlaufenden Wand vorgesehen, die nach oben und unten über die Plattform 30 hinausragt. Mittels dieser Ausgestaltung können Backwaren 13, 14 von zwei verschiedenen Seiten durch die Plattform 30 aufgenommen und abgegeben werden, ohne dass die Backware 13 bzw. 14 in der einen oder anderen Position von der Plattform 30 nach hinten rutschen können, sondern stets von der Rückhalteeinrichtung 34 hieran gehindert werden. Somit kann die Plattform 30 sowohl von ihrer Oberseite als auch ihrer Unterseite beladen werden. Hierzu wird die der Rückhalteeinrichtung 34 abgewandte Kante der Plattform 30 der entsprechenden Zufördereinrichtung 20 zugewandt und die gesamte Plattform 30 in die passende Höhe und Neigung verfahren. Durch Förderung auf die geneigte Plattform 30 rutscht die Backware 13 auf der Plattform 30 bis an die Rückhalteeinrichtung 34 (s. die in der Fig. 6 mittig dargestellte Plattform 30). Anschließend wird die Plattform 30 nach unten gefahren (s. Fahrrichtung 26) und durch Verschwenken der Plattform 30 unter Kreuzen einer Horizontalebene die Backware 13 in die Abförderstelle 40 transportiert. Soll eine Backware 13 oder 14 von der anderen (in der Fig. 6 rechten) Zufördereinrichtung 20 von der Plattform 30 aufgenommen werden, wird diese durch Überqueren einer Vertikalebene um die Schwenkachse 31 verschwenkt, so dass die andere Seite der Plattform 30 nach oben zeigt (s. oberste Plattform 30 in der Fig. 6).

Bei den beiden Ausführungsbeispielen der Fig. 7 und 8 sind zwei Varianten dargestellt, bei denen die Plattform 30 mittels zweier paralleler und beabstandeter Achsen 31, 31a aufgehängt sind, wobei einer dieser Achsen der für die anderen Ausführungsformen beschriebenen Schwenkachse 31 entspricht. Durch eine Relativbewegung der beiden Achsen 31, 31a zueinander in Vertikalrichtung (angedeutet durch die beiden Pfeilen 26a) kann die Plattform 30 verschwenkt werden. Durch die doppelte Aufhängung der Plattform 30 können insbesondere relativ schwere Lebensmittel kippsicher und stabil gefördert werden. Ist die Plattform 30 in ihre gewünschte Lage geneigt und ist eine Backware 13 auf ihr aufgenommen worden, wird die Plattform 30, vorzugsweise unter Beibehaltung ihrer Neigungslage, durch dann gleichförmige Abwärtsbewegung beider Förderstränge 28, vermittelt durch zwei Schrittmotoren 27a, nach unten bewegt. Zum Abkippen der Backware 13 wird wiederum einer der beiden Förderstränge 28 mittels des zugehörigen Schrittmotors 27a relativ zum anderen Förderstrang 28 bewegt.

Die Erfindung wurde anhand mehrerer Ausführungsbeispiele näher erläutert, ohne dass diese einschränkend auszulegen wären. Abwandlungen innerhalb der Ansprüche sind ohne weiteres möglich. So ist es beispielsweise möglich, dass mehr als zwei unterschiedliche Backwaren 13, 14 in einer erfindungsgemäßen Vorrichtung förder- und ausgebbar.

### Bezugszeichenliste

- 1: Vorrichtung
- 2: Gehäuse
- 3: Vorderwand
- 4: Seitenwand
- 5: Seitenwand
- 6: Rückwand
- 7: Abdeckung
- 10: Träger
- 11: Endloskette
- 13: Brot
- 14: Brötchen
- 20: Zufördereinrichtung
- 21: Förderrichtung
- 22: Schieber
- 25: Transporteinrichtung
- 26: Fahrtrichtung
- 27, 27a: Schrittmotor
- 28: Förderstrang
- 30: Verschwenkbare Plattform
- 31: Horizontale Schwenkachse
- 31a: Horizontale Schwenkachse
- 32: Schrittmotor
- 33: Schwenkrichtung
- 34: Rückhalteeinrichtung
- 35: Schacht
- 39: Scheibe
- 40: Abförderstelle
- 41: Rutsche
- 43: Rutsche
- 44: Sammelbehälter
- 47: Backofen
- 48: Förderband
- 49: Förderrichtung
- 50: Steuereinrichtung

## Patentansprüche

1. Lebensmittelförder- und -abgabevorrichtung, mit:
- einem Gehäuse (2);
- mindestens einer Zufördereinrichtung (20) in dem Gehäuse (2), auf der Lebensmittel (13, 14), insbesondere Backwaren, in Horizontalrichtung förderbar sind,
- einem vertikal zur Horizontalrichtung verlaufenden Schacht (35) in dem Gehäuse (2),
- einer motorisch angetriebenen, im Schacht (35) auf- und abwärts fahrenden Transporteinrichtung (25), welche von der mindestens einen Zufördereinrichtung (20) mit mindestens einem Lebensmittel (13, 14) beschickbar ist, und
- einer Abförderstelle (40) in oder an dem Gehäuse (2), in deren Richtung die Transporteinrichtung (25) das mindestens eine Lebensmittel (13, 14) fördert, wobei die Transporteinrichtung (25) mindestens eine im Schacht (35) in Vertikalrichtung verfahrbare, um eine horizontale Schwenkachse (31) verschwenkbare Plattform (30) aufweist, die mit mindestens einem Lebensmittel (13, 14) beschickbar ist,
**dadurch gekennzeichnet, dass** die schwenkbare Plattform (30) mittels eines Schrittmotors (32; 27a) verschwenkbar ist, und dass die Plattform (30) derart ausgebildet und schwenkbar angeordnet ist, dass sie von zwei Seiten beladbar ist, einerseits von der Seite der besagten Zufördereinrichtung (20) und andererseits von der gegenüberliegenden Seite mittels mindestens einer weiteren, mindestens ein weiteres Lebensmittel in Horizontalrichtung fördernden Zufördereinrichtung (20), die ebenfalls Teil der Vorrichtung ist.

2. Vorrichtung nach Anspruch 1, **dadurch gekennzeichnet, dass** mehrere Zufördereinrichtungen (20) übereinander in dem Gehäuse (2) angeordnet sind, von denen zumindest einige zur Beschickung der mindestens einen Plattform (30) ausgebildet sind.

3. Vorrichtung nach mindestens einem der vorhergehenden Ansprüche, **dadurch gekennzeichnet, dass** die Schwenkachse (31) der Plattform (30) senkrecht zur Förderrichtung (21) der Zufördereinrichtungen (20) zur Plattform (30) hin ausgerichtet ist.

4. Vorrichtung nach mindestens einem der vorhergehenden Ansprüche, **dadurch gekennzeichnet, dass** der Schrittmotor (32) mit der Schwenkachse (31) gekoppelt ist oder an einer anderen Stelle der Plattform (30) angreift, um die Plattform (30) um die Schwenkachse (31) zu verschwenken.

5. Vorrichtung nach mindestens einem der vorhergehenden Ansprüche, **dadurch gekennzeichnet, dass** bei einer Übergabe des mindestens einen Lebensmittels (13, 14) von einer der Zufördereinrichtungen (20) auf die schwenkbare Plattform (30) die Plattform (30) zu dieser Zufördereinrichtung (20) hin aufwärts geneigt positioniert wird, damit das mindestens eine Lebensmittel (13, 14) von der Transporteinrichtung (25) auf die Plattform (30) rutschen kann, und/oder dass bei einer Übergabe des mindestens einen Lebensmittels (13, 14) von der schwenkbaren Plattform (30) an die Abförderstelle (40) die Plattform (30) zur Abförderstelle (40) hin abwärts geneigt positioniert wird, damit das mindestens eine Lebensmittel (13, 14) von der schwenkbaren Plattform (30) zur Abförderstelle (40) rutschen kann.

6. Vorrichtung nach mindestens einem der vorhergehenden Ansprüche, **dadurch gekennzeichnet, dass** die schwenkbare Plattform (30) während der Fahrt von der Zufördereinrichtung (20) zur Abförderstelle (40) zur Lagefixierung des auf der Plattform (30) befindlichen Lebensmittels (13, 14) in einer gegenüber einer Horizontalebene verschwenkten Lage positionierbar ist.

7. Vorrichtung nach mindestens einem der vorhergehenden Ansprüche, **dadurch gekennzeichnet, dass** der Plattform (30) auf der der Zufördereinrichtung (20) abgewandten oder abwendbaren Seite eine aufwärts ragende Rückhalteeinrichtung (34), beispielsweise ausgebildet als Wand oder Gitter, zugeordnet ist.

8. Vorrichtung nach mindestens einem der vorhergehenden Ansprüche, **dadurch gekennzeichnet, dass** die schwenkbare Plattform (30) mittels eines weiteren Schrittmotors (27; 27a) im Schacht (35) verfahrbar ist.

9. Vorrichtung nach mindestens einem der vorhergehenden Ansprüche, **dadurch gekennzeichnet, dass** die Transporteinrichtung (25) mindestens ein umlaufendes Element, wie ein Förderband, einen Fördergurt, ein Förderseil und/oder eine Förderkette, umfasst, an dem die mindestens eine Plattform (30) angelenkt ist und vorzugsweise auch der Schrittmotor (32) zum Verschwenken der Plattform (30) angeordnet ist.

10. Vorrichtung nach mindestens einem der vorhergehenden Ansprüche, **dadurch gekennzeichnet, dass** die mindestens eine Plattform (30) derart ausgebildet ist, dass ihre Oberseite und ihre Unterseite wahlweise nach oben zeigend schwenkbar ist, insbesondere um Lebensmittel (13, 14) von zwei verschiedenen Seiten aufzunehmen und abzugeben.

11. Vorrichtung nach mindestens einem der Ansprüche 1 bis 9, **dadurch gekennzeichnet, dass** die mindestens eine Plattform (30) mittels zweier paralleler und beabstandeter Achsen (31, 31a), von denen eine die besagte Schwenkachse (31) ist, angelenkt aufgehängt ist, und dass die Plattform (30) durch Relativbewegung der beiden Achsen (31, 31a) in Vertikalrichtung verschwenkbar ist.

12. Einheit mit einem Backofen (47) und einer dem Backofen (47) nachgeschalteten Vorrichtung (1), wobei die Vorrichtung (1) nach mindestens einem der vorhergehenden Ansprüche ausgebildet ist.

## Claims

1. A foodstuff conveying and dispensing apparatus, comprising:
- a housing (2);
- at least one feeding device (20) in the housing (2), on which foodstuffs (13, 14), in particular baking goods, can be conveyed in a horizontal direction,
- a shaft (35) extending vertically to the horizontal direction in the housing (2),
- a motor-driven transport device (25) which travels up and down in the shaft (35) and which is able to be charged with at least one foodstuff (13, 14) by the at least one feeding device (20), and
- a discharging point (40) in or on the housing (2), the transport device (25) conveying the at least one foodstuff (13, 14) in the direction of said discharging point (40), wherein the transport device (25) has at least one platform (30) which is able to travel in a vertical direction in the shaft (35), is pivotable about a horizontal pivot axle (31), and is able to be charged with at least one foodstuff (13, 14),
**characterized in that** the pivotable platform (30) is pivotable by means of a stepper motor (32; 27a), and that the platform (30) is configured and pivotably arranged such that it is able to be loaded from two sides, on one hand from the side of said feeding device (20) and on the other hand from the opposite side by means of at least one further feeding device (20), conveying at least one further foodstuff in horizontal direction, which is likewise part of the apparatus.

2. The apparatus as claimed in claim 1, **characterized in that** a plurality of feeding devices (20) are arranged one above another in the housing (2), at least some of said feeding devices (20) being configured to charge the at least one platform (30).

3. The apparatus as claimed in at least one of the preceding claims, **characterized in that** the pivot axle (31) of the platform (30) is oriented perpendicularly to the conveying direction (21) of the feeding device (20) toward the platform (30).

4. The apparatus as claimed in at least one of the preceding claims, **characterized in that** the stepper motor (32) is coupled to the pivot axle (31) or acts on a different point of the platform (30) in order to pivot the platform (30) about the pivot axle (31).

5. The apparatus as claimed in at least one of the preceding claims, **characterized in that**, when the at least one foodstuff (13, 14) is transferred from one of the feeding devices (20) to the pivotable platform (30), the platform (30) is positioned in a manner inclined upward toward this feeding device (20) in order that the at least one foodstuff (13, 14) can slide from the transport device (25) onto the platform (30) and/or when the at least one foodstuff (13, 14) is transferred from the pivotable platform (30) to the discharging point (40), the platform (30) is positioned in a manner inclined downward toward the discharging point (40) in order that the at least one foodstuff (13, 14) can slide from the pivotable platform (30) to the discharging point (40).

6. The apparatus as claimed in at least one of the preceding claims, **characterized in that**, during the passage from the feeding device (20) to the discharging point (40), the pivotable platform (30) is positionable in a pivoted position with respect to a horizontal plane in order to fix the position of the foodstuff (13, 14) located on the platform (30).

7. The apparatus as claimed in at least one of the preceding claims, **characterized in that** an upwardly projecting retention device (34), configured for example as a wall or grating, is assigned to the platform (30) on the side that faces away from or is able to be turned away from the feeding device (20).

8. The apparatus as claimed in at least one of the preceding claims, **characterized in that** the pivotable platform (30) is movable in the shaft (35) by means of a further stepper motor (27; 27a).

9. The apparatus as claimed in at least one of the preceding claims, **characterized in that** the transport device (25) comprises at least one circulating element, such as a conveyor band, a conveyor belt, a conveyor cable and/or a conveyor chain, to which the at least one platform (30) is attached in an articulated manner and to which preferably also the stepper motor (32) for pivoting the platform (30) is arranged.

10. The apparatus as claimed in at least one of the preceding claims, **characterized in that** the at least one platform (30) is configured in such a way that the top side and the underside thereof are able to be pivoted so as to selectively point upward, in particular in order to receive and dispense foodstuffs (13, 14) on two different sides.

11. The apparatus as claimed in at least one of claims 1 to 9, **characterized in that** the at least one platform (30) is mounted in an articulated manner by means of two parallel and spaced-apart axles (31, 31a), of which one is said pivot axle (31), and **in that** the platform (30) is pivotable by relative movement of the two axles (31, 31a) in a vertical direction.

12. A unit having an oven (47) and an apparatus (1) connected downstream of the oven (47), wherein the apparatus (1) is configured as claimed in at least one of the preceding claims.

## Revendications

1. Dispositif de transport et de distribution de denrées alimentaires, avec :
- un carter (2) ;
- au moins un dispositif d'alimentation (20) dans le carter (2), sur lequel peuvent être transportées des denrées alimentaires (13, 14), en particulier des produits de boulangerie et de pâtisserie, dans le sens horizontal,
- un puits (35) s'étendant verticalement par rapport au sens horizontal dans le carter (2),
- un dispositif de transport (25) entraîné par moteur et se déplaçant vers le haut et vers le bas dans le puits (35), qui peut être chargé par le, au moins un, dispositif d'alimentation (20) avec au moins une denrée alimentaire (13, 14), et
- un point d'évacuation (40) dans ou sur le carter (2), dans la direction duquel le dispositif de transport (25) transporte l'au moins une denrée alimentaire (13, 14), le dispositif de transport (25) présentant au moins une plateforme (30) déplaçable dans le sens vertical dans le puits (35) et pivotable autour d'un axe de pivotement (31) horizontal, qui peut être chargée d'au moins une denrée alimentaire (13, 14),
**caractérisé en ce que** la plateforme pivotable (30) peut être pivotée au moyen d'un moteur pas à pas (32 ; 27a), et **en ce que** la plateforme (30) est conçue et disposée de manière pivotable de sorte qu'elle peut être chargée de deux côtés, d'une part du côté dudit dispositif d'alimentation (20) et, d'autre part, du côté opposé au moyen d'au moins un autre dispositif d'alimentation (20) transportant au moins une autre denrée alimentaire dans le sens horizontale, qui fait également partie du dispositif.

2. Dispositif selon la revendication 1, **caractérisé en ce que** plusieurs dispositifs d'alimentation (20) sont disposés les uns au-dessus des autres dans le carter (2), dont au moins quelques-uns sont conçus pour charger ladite au moins une plateforme (30).

3. Dispositif selon au moins l'une des revendications précédentes, **caractérisé en ce que** l'axe de pivotement (31) de la plateforme (30) est orienté perpendiculairement à la direction de transport (21) des dispositifs d'alimentation (20) vers la plateforme (30).

4. Dispositif selon au moins l'une des revendications précédentes, **caractérisé en ce que** le moteur pas à pas (32) est couplé à l'axe de pivotement (31) ou vient en prise avec un autre endroit de la plateforme (30) pour faire pivoter la plateforme (30) autour de l'axe de pivotement (31).

5. Dispositif selon au moins l'une des revendications précédentes, **caractérisé en ce que**, lors d'un transfert de ladite au moins une denrée alimentaire (13, 14) de l'un des dispositifs d'alimentation (20) sur la plateforme pivotable (30), la plateforme (30) est positionnée inclinée vers le haut en direction de ce dispositif d'alimentation (20) afin que ladite au moins une denrée alimentaire (13, 14) puisse glisser du dispositif de transport (25) sur la plateforme (30), et/ou **en ce que**, lors d'un transfert de l'au moins une denrée alimentaire (13, 14) de la plateforme pivotable (30) au point d'évacuation (40), la plateforme (30) est positionnée inclinée vers le bas en direction du point d'évacuation (40), afin que ladite au moins une denrée alimentaire (13, 14) puisse glisser de la plateforme pivotable (30) vers le point d'évacuation (40).

6. Dispositif selon au moins l'une des revendications précédentes, **caractérisé en ce que** la plateforme pivotable (30) peut être positionnée dans une position pivotée par rapport à un plan horizontal pendant la course du dispositif d'alimentation (20) vers le point d'évacuation (40) pour fixer la position de la denrée alimentaire (13, 14) se trouvant sur la plateforme (30).

7. Dispositif selon au moins l'une des revendications précédentes, **caractérisé en ce qu'**un dispositif de retenue (34) faisant saillie vers le haut, par exemple réalisé sous forme de paroi ou de grille, est associé à la plateforme (30) sur le côté opposé au dispositif d'alimentation (20) ou pouvant être détourné de celui-ci.

8. Dispositif selon au moins l'une des revendications précédentes, **caractérisé en ce que** la plateforme pivotable (30) est déplaçable dans le puits (35) au moyen d'un autre moteur pas à pas (27 ; 27a).

9. Dispositif selon au moins l'une des revendications précédentes, **caractérisé en ce que** le dispositif de transport (25) comprend au moins un élément circulant, tel qu'une bande transporteuse, une courroie transporteuse, un câble transporteur et/ou une chaîne transporteuse, sur lequel la, au moins une, plateforme (30) est articulée et, de préférence, le moteur pas à pas (32) pour faire pivoter la plateforme (30) est également disposé.

10. Dispositif selon au moins l'une des revendications précédentes, **caractérisé en ce que** la, au moins une, plateforme (30) est configurée de sorte que sa face supérieure et sa face inférieure puissent pivoter sélectivement vers le haut, en particulier pour recevoir et distribuer des denrées alimentaires (13, 14) sur deux côtés différents.

11. Dispositif selon au moins l'une des revendications 1 à 9, **caractérisé en ce que** la, au moins une, plateforme (30) est suspendue de manière articulée au moyen de deux axes (31, 31a) parallèles et espacés l'un de l'autre, dont l'un est ledit axe de pivotement (31), et **en ce que** la plateforme (30) peut pivoter dans le sens verticale par mouvement relatif des deux axes (31, 31a).

12. Unité comprenant un four de cuisson (47) et un dispositif (1) disposé en aval du four de cuisson (47), le dispositif (1) étant réalisé selon au moins l'une des revendications précédentes.
